# FASCICULE DE BREVET EUROPEEN

(11) **EP 3 004 630 B1**
(45) Date de publication et mention de la délivrance du brevet: **31.01.2018**
(21) Numéro de dépôt: 14726161.4
(22) Date de dépôt: 24.05.2014
(51) Int. Cl.: F03B 13/10, F03B 13/18, F03B 15/00, F03B 13/26, F03B 17/06, F03B 5/00

(54) **SUPPORT PIVOT HYDROLIENNE**
DREHSCHEMEL FÜR MEERESTURBINE
MARINE TURBINE PIVOT SUPPORT

(30) Priorité: 31.05.2013 FR 1355016
(43) Date de publication de la demande: 13.04.2016
(73) Titulaire: EEL ENERGY, 75007 Paris (FR)
(72) Inventeur: DREVET, Jean Baptiste, 75005 Paris (FR)
(74) Mandataire: Lavialle, Bruno François Stéphane
(86) Numéro de dépôt international: PCT/EP2014/060751
(87) Numéro de publication internationale: WO 2014/191331

(56) Documents cités:
- WO-A2-2012/123465
- DE-B3-102012 202 091
- US-A1- 2012 000 193

## Description

L'invention concerne le domaine général des hydroliennes agencées pour collecter de l'énergie mécanique dans un écoulement fluide.

### ARRIERE PLAN DE L'INVENTION

On connait par exemple des brevets WO2010012888, WO2012/123465, DE102012202091 une hydrolienne agencée pour collecter de l'énergie mécanique dans un écoulement de fluide tel que de l'eau. Le rendement d'une telle hydrolienne, dépend en grande partie de son orientation par rapport à la direction et au sens de l'écoulement du fluide dans lequel elle est plongée.

### OBJET DE L'INVENTION

Un objet de la présente invention est de fournir une hydrolienne permettant une orientation de l'ensemble de captage d'énergie dans l'écoulement de fluide.

### RESUME DE L'INVENTION

A cet effet, selon l'invention, il est proposé une hydrolienne comprenant :
- un ensemble de captage d'énergie adapté à capter de l'énergie mécanique dans un écoulement de fluide liquide, l'ensemble de captage comportant un axe de captage d'énergie privilégié tel que le rendement de captage d'énergie mécanique dans l'écoulement, par l'ensemble de captage, est maximum lorsque cet axe de captage d'énergie privilégié est placé parallèlement à un sens d'écoulement de fluide dans lequel est plongé l'ensemble de captage ; l'hydrolienne comportant en outre ;
- un support pour porter l'ensemble de captage.

L'hydrolienne selon l'invention est essentiellement caractérisée en ce qu'elle comporte des moyens d'orientation de l'ensemble de captage par rapport au support, ces moyens d'orientation étant agencés pour orienter l'ensemble de captage par pivotement de cet ensemble de captage selon au moins un axe du support, et pour réaliser cette orientation de manière à ce que lorsque l'ensemble de captage est plongé dans un écoulement de fluide liquide présentant un sens d'écoulement et une vitesse minimale d'écoulement donnée, l'axe de captage d'énergie privilégié soit sensiblement orienté parallèlement au sens d'écoulement, ces moyens d'orientation comportant en outre des moyens élastiques de rappel de l'ensemble de captage vers une position angulaire de référence de l'ensemble de captage par rapport au support.

Pour la compréhension de l'invention, l'expression « l'axe de captage d'énergie privilégié sensiblement orienté parallèlement au sens d'écoulement » signifie que l'axe de captage d'énergie privilégié doit être parallèle au sens de l'écoulement de fluide à plus ou moins 20° près et préférentiellement à plus ou moins 5° près. On choisi préférentiellement cette limitation à +/-20° près lorsque l'hydrolienne est placée dans un courant de faible vitesse, inférieure à 0.5m/s. On choisi préférentiellement cette limitation à +/-5° près lorsque l'hydrolienne est placée dans un courant de vitesse élevée, c'est-à-dire supérieure à 0.5m/s. L'orientation de l'axe de captage d'énergie privilégié dans le courant est préférentiellement réalisée par les forces de trainée de l'hydrolienne et de son support (lequel peut disposer d'un panneau vertical pour augmenter l'effet d'orientation généré par les forces de trainée). On note que les forces de trainée évoluent au carré de la vitesse du courant, ainsi la précision de l'orientation augmente avec l'augmentation de la vitesse du courant. On note que le sens de l'écoulement s'étend selon une droite de direction d'écoulement, l'écoulement présentant un sens d'écoulement étant assimilé à un écoulement laminaire.

Grâce aux moyens d'orientation selon l'invention, lorsque l'ensemble de captage est plongé dans un écoulement de fluide laminaire qui présente une direction rectiligne, un sens d'écoulement et une vitesse supérieure où égale à la vitesse minimale d'écoulement donnée, l'ensemble de captage est orienté dans l'écoulement pour que l'axe de captage d'énergie privilégié de cet ensemble soit sensiblement parallèle au sens de l'écoulement.

La vitesse minimale donnée est choisie pour être la vitesse de l'écoulement à partir de laquelle on veut que les moyens d'orientation autorisent / réalisent l'orientation de l'ensemble de captage par rapport au sens de l'écoulement de telle manière que l'axe de captage d'énergie privilégié soit sensiblement parallèle au sens de l'écoulement et par conséquent sensiblement parallèle à la direction de cet écoulement.

En dessous de cette vitesse minimale d'écoulement donnée, les moyens d'orientation maintiennent l'ensemble de captage dans sa position de référence fixe par rapport au support, cette position angulaire de référence étant indépendante de la direction et/ou du sens de l'écoulement.

L'orientation de l'ensemble de captage dans l'écoulement de fluide est effectuée par les moyens d'orientation qui coopèrent avec l'ensemble de captage, de manière à prendre à la fois en compte le sens de l'écoulement et la vitesse de cet écoulement pour réaliser cette orientation. Ainsi, si la vitesse de l'écoulement est suffisante, les moyens d'orientation orientent l'ensemble de captage de manière à ce que son axe de captage d'énergie privilégié suive le sens de l'écoulement et/ou la direction de l'écoulement y compris s'ils viennent à varier et/ou s'inverser.

En adaptant l'orientation de l'ensemble de captage dans l'écoulement, les moyens d'orientation autorisent une potentielle optimisation de la quantité d'énergie mécanique captée dans l'écoulement, en particulier dans les phases où l'écoulement présente une vitesse supérieure à la vitesse minimale donnée et change de sens.

On a remarqué, que dans certains cas, en particulier dans un cas où l'écoulement de fluide est associé à une marée alternativement montante et descendante, le changement de sens et/ou de direction de l'écoulement s'accompagne d'une baisse de la vitesse de l'écoulement au moment de l'invention du sens de marée. Une fois que l'écoulement a de nouveau retrouvé un sens d'écoulement stable, la vitesse de l'écoulement augmente à nouveau. En utilisant des moyens élastiques de rappel de l'ensemble de captage vers une position angulaire de référence de l'ensemble de captage par rapport au support, l'invention permet d'orienter l'ensemble de captage dans la position angulaire de référence prédéterminée dès que la vitesse de l'écoulement de fluide passe sous la vitesse minimale prédéterminée.

Idéalement, l'hydrolienne selon l'invention est implantée de manière que l'axe de captage d'énergie privilégié de l'ensemble de captage dans sa position de référence par rapport au support soit alignée, parallèle avec un sens d'écoulement stabilisé bien connu pour un fond marin donné. Ce sens d'écoulement bien connu est préférentiellement le sens du courant établi en début de marée descendante ou en début de marée montante.

Sur un cycle où l'on a une marée montante, avec un courant s'écoulant dans un sens propre à cette marée montante, suivi d'une marée descendante, avec un courant s'écoulant dans un autre sens qui est un sens propre à la marée descendante, l'invention permet de positionner l'ensemble de captage dans la position de référence, correspondant par exemple au sens propre à la marée descendante, avant même que la vitesse de ce courant de la marée descendante ne soit suffisante pour forcer l'orientation de l'ensemble de captage dans le sens propre à la marée descendante.

Comme, sur un cycle de marées, on a à peu près 1/4 du temps de cycle qui correspond à un temps d'étale avec un écoulement présentant une vitesse :
- insuffisante pour orienter l'ensemble de captage ;
- mais suffisante pour permettre un captage d'énergie mécanique par l'ensemble de captage s'il est correctement orienté dans l'écoulement.

L'invention permet grâce aux moyens élastiques de rappel, d'orienter l'ensemble de captage afin qu'il commence à capter de l'énergie dans l'écoulement de marée descendante dès l'inversion de marée.

Si elle est correctement implantée par rapport à un fond marin, l'hydrolienne selon l'invention permet à l'aide de moyens élastiques simples d'augmenter, la durée potentielle de captage d'énergie mécanique sur un cycle de marées montante / descendante.

Pour toutes ces raisons, l'invention permet au global d'améliorer le rendement de captage d'énergie sur un cycle de marées.

Selon un mode de réalisation privilégié de l'invention, les moyens d'orientation sont agencés pour réaliser cette orientation de l'ensemble de captage par rapport au sens de l'écoulement dès que la vitesse minimale d'écoulement donnée dépasse 0.4 mètres par seconde. En d'autres termes, les moyens d'orientation sont agencés pour maintenir l'ensemble de captage dans la position angulaire de référence tant que la vitesse de l'écoulement est inférieure à 0.4 mètres par seconde. Au-delà de cette vitesse minimale, les moyens d'orientation réalisent l'orientation de l'ensemble de captage dans l'écoulement en fonction du sens de l'écoulement.

Dans un mode de réalisation de l'invention, l'hydrolienne comporte des moyens de génération d'un effort de traînée lorsque l'ensemble est plongé dans l'écoulement fluide, ces moyens de génération d'effort de traînée sont disposés de manière à ce que l'effort de traînée génère un couple sur les moyens d'orientation tel qu'il oriente l'ensemble de captage pour que l'axe de captage d'énergie privilégié soit sensiblement orienté parallèlement au sens de l'écoulement.

Ces moyens de génération de l'effort de traînée peuvent comporter :
- un élément formant dérive de l'ensemble de captage, comme la membrane ondulante de l'ensemble de captage présentée ci-après ; et/ou
- un élément formant dérive des moyens d'orientation, tels qu'une dérive s'étendant depuis les moyens d'orientation parallèlement à l'axe du support.

Pour favoriser l'orientation de l'ensemble de captage dans l'écoulement, on fait en sorte que les moyens d'orientation soient placés de manière que l'effort de traînée généré sur l'ensemble de captage plongé dans l'écoulement génère un couple autour de l'axe de support tel qu'il oriente l'ensemble de captage pour que l'axe de captage d'énergie privilégié soit sensiblement orienté parallèlement au sens de l'écoulement.

L'invention concerne en outre un procédé d'utilisation d'une hydrolienne selon l'un quelconque des modes de réalisation de l'invention, cette hydrolienne comportant en outre des moyens d'ancrage du support agencés pour permettre un ancrage du support sur un sol d'un fond marin et interdire la rotation de ce support par rapport au sol sur lequel il est ancré.

Le procédé selon l'invention est essentiellement caractérisé en ce qu'il comprend une étape d'ancrage du support de l'hydrolienne sur le sol de manière que lorsque l'ensemble de captage est en position angulaire de référence par rapport au support, l'axe de captage d'énergie privilégié se trouve alors sensiblement parallèle à une direction d'écoulement de fluide correspondant à la direction d'écoulement principale du courant marin lors d'une marée montante et/ou d'une marée descendante.

Pour la compréhension de l'invention, l'expression « l'axe de captage d'énergie privilégié se trouve sensiblement parallèle à une direction d'écoulement de fluide » signifie que l'axe de captage d'énergie privilégié est parallèle à plus ou moins 20° près par rapport à la direction de l'écoulement. Lorsque la vitesse de l'écoulement est suffisamment élevée, c'est-à-dire supérieure à la vitesse minimale donnée, l'ensemble de captage est orienté par les moyens d'orientation pour que l'axe de captage d'énergie privilégié soit sensiblement parallèle à un sens courant de l'écoulement. Dès que la vitesse de l'écoulement est inférieure à la vitesse d'écoulement donnée, en général 0.4 mètres par seconde, alors l'ensemble de captage est pivoté pour que l'ensemble de captage se trouve dans sa position angulaire de référence par rapport au support, l'axe de captage d'énergie privilégié étant alors sensiblement parallèle à la direction principale de l'écoulement à venir qui correspond à un écoulement en début de marée montante et/ou de marée descendante.

L'hydrolienne selon l'invention avec ses moyens élastiques de rappel est particulièrement adaptée à être implantée dans un environnement présentant des courants de marée qui changent de sens et d'intensité en décrivant « une rose des courants ».

Pour les applications où les courants changent peu de direction, comme des courants océaniques ou des courants de rivières, les moyens d'orientation peuvent présenter des moyens élastiques de rappel présentant des caractéristiques de rappel élastique plus faibles. Ainsi dans certains modes de réalisation, on peut faire en sorte de choisir la raideur des moyens élastiques de rappel et/ou une valeur de pré charge de ces moyens élastiques en fonction des types de courants présents sur le lieu d'implantation de l'hydrolienne. Dans un mode particulier de réalisation de l'invention, des moyens de réglage peuvent être agencés pour faire varier des caractéristiques de rappel élastique comme la raideur des moyens élastiques et/ou un effort de pré charge de ces moyens élastiques.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- la figure 1 représente une vue en perspective d'une hydrolienne selon l'invention alors qu'elle se trouve immergée dans un écoulement de fluide laminaire ;
- la figure 2 représente l'hydrolienne de la figure 1 sans sa membrane ondulante appartenant à l'ensemble de captage d'énergie ;
- la figure 3 présente une partie de l'ensemble de captage d'énergie présenté à la figure 1, cette partie étant destinée d'une part à porter la membrane ondulante et d'autre part à être assemblée sur une partie tournante des moyens d'orientation ;
- la figure 4 présente le support et les moyens d'orientation de l'hydrolienne de la figure 1, ces moyens d'orientation étant agencés pour supporter la partie de l'ensemble de captage présentée à la figure 3 ;
- la figure 5 présente une portion du support et des moyens d'orientation de la figure 1 vus en coupe transversale selon l'axe de support ;
- la figure 6 présente une vue en coupe transversale des moyens d'orientation de l'hydrolienne selon l'invention, cette coupe étant selon l'axe de support ;
- la figure 7 présente une vue éclatée en coupe transversale des moyens d'orientation de la figure 6, cette coupe étant selon l'axe de support ;
- la figure 8 présente une vue éclatée en perspective d'une partie des moyens d'orientation de l'hydrolienne selon l'invention, cette partie présentant des moyens élastique de rappel de l'ensemble de captage par rapport au support ;
- la figure 9 présente une vue en perspective de la partie des moyens d'orientation de la figure 8 alors qu'ils sont assemblés ;
- la figure 10 présente le couple nécessaire à l'orientation de l'ensemble de captage d'énergie en fonction d'un angle d'orientation θ dont l'origine correspond à la position angulaire de référence de l'ensemble de captage par rapport au support.

### DESCRIPTION DETAILLEE DE L'INVENTION

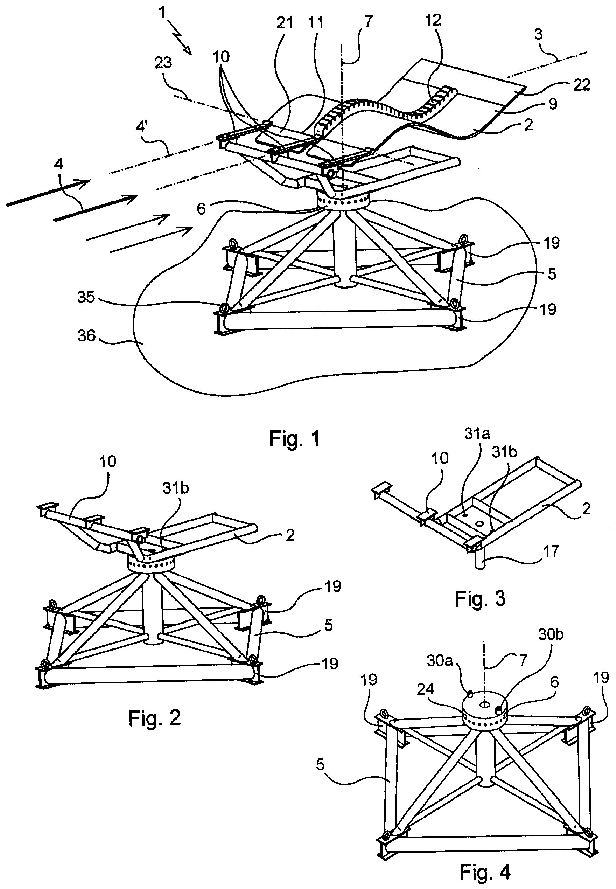

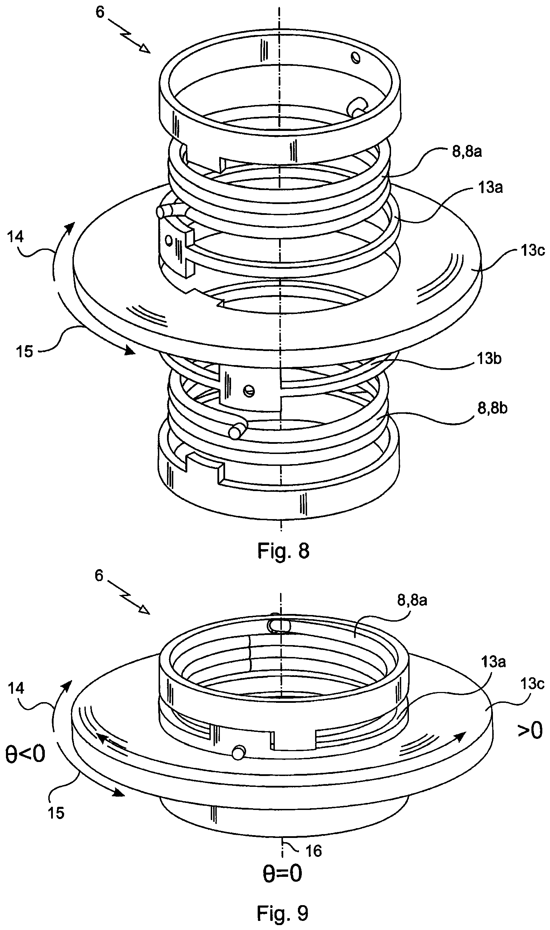

Comme indiqué précédemment, l'invention concerne une hydrolienne 1 illustrée à la figure 1 et dont des éléments constitutifs sont illustrés aux figures 2 à 9.

L'hydrolienne 1 comprend un ensemble de captage d'énergie 2 adapté à capter de l'énergie mécanique dans un écoulement de fluide liquide présentant un sens d'écoulement 4.

Cet ensemble de captage 2 comporte un axe de captage d'énergie privilégié 3 tel que le rendement de captage d'énergie mécanique, dans l'écoulement, par l'ensemble de captage est maximum lorsque cet axe de captage d'énergie privilégié 3 est placé parallèlement au sens d'écoulement de fluide 4 dans lequel est plongé l'ensemble de captage 2.

L'hydrolienne 1 comporte en outre un support 5 pour porter l'ensemble de captage 2 et des moyens d'orientation 6 de l'ensemble de captage 2 par rapport au support 5. Ces moyens d'orientation 6 sont agencés pour coopérer avec l'ensemble 2 et l'orienter par pivotement selon un axe du support 7 qui est préférentiellement orienté verticalement.

Ces moyens d'orientation sont reliés d'une part au support 5 et d'autre part à l'ensemble de captage 2 pour réaliser l'orientation de l'ensemble 2 plongé dans un écoulement de fluide présentant un sens d'écoulement 4 et une vitesse minimale d'écoulement donnée de manière que l'axe de captage d'énergie privilégié soit sensiblement orienté parallèlement au sens d'écoulement 4.

Ces moyens d'orientation 6 comportent en outre des moyens élastiques de rappel 8 de l'ensemble de captage 2 vers une position angulaire de référence 16 de l'ensemble de captage 2 par rapport au support 5.

Ainsi, grâce à l'invention, on peut :
- d'une part orienter l'ensemble de captage dans l'écoulement de fluide dès que la vitesse de cet écoulement est suffisante, c'est-à-dire dès qu'elle est supérieure à la vitesse minimale prédéterminée qui est la vitesse à partir de laquelle on considère que l'écoulement présente un sens d'écoulement effectif / établi ; et
- d'autre part forcer le retour de l'ensemble de captage dans la position de référence dès que la vitesse de l'écoulement est trop faible pour qu'on considère le sens de l'écoulement 4 comme effectivement établi.

En outre, comme les moyens élastiques de rappel 8 sont agencés pour forcer le rappel de l'ensemble de captage 2 vers sa position de référence 16, ils s'opposent également à ce que l'ensemble de captage 2 s'écarte de sa position de référence 16 tant que la vitesse de l'écoulement est inférieure à la vitesse minimale d'écoulement donnée / prédéterminée.

Pour qu'il y ait orientation de l'ensemble de captage, il faut que le sens d'écoulement 4 soit bien établi et présente une vitesse d'écoulement significative. En d'autres termes, tant que l'ensemble de captage est soumis un écoulement turbulent n'ayant pas de sens d'écoulement 4 bien établi et/ou de vitesse suffisante, les moyens élastiques 8 maintiennent alors l'ensemble de captage 2 dans sa position angulaire de référence 16 jusqu'à ce que l'écoulement présente une vitesse et un sens d'écoulement bien établi.

La vitesse minimale donnée est choisie pour être de 0.4 mètres par seconde. L'hydrolienne peut par exemple comporter des moyens de réglage mécanique ou électromécanique permettant de régler la valeur de la vitesse minimale à partir de laquelle l'axe de captage d'énergie privilégié 3 est orienté parallèlement au sens d'écoulement.

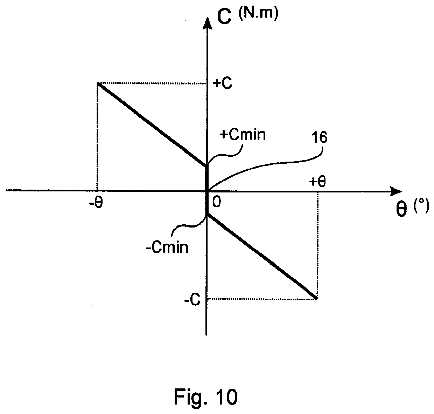

Les moyens d'orientation 6 sont agencés pour que dès que l'écoulement est laminaire et passe la vitesse minimale donnée, on ait alors un couple minimum forçant le pivotement de l'ensemble de captage au-delà de sa position angulaire de référence. Ce couple minimum Cmin est illustré à la figure 10 où l'on voit que tant que le couple C exercé entre le support 5 et l'ensemble de captage 2 autour de l'axe de support 7 n'est pas supérieur en valeur absolue à la valeur absolue du couple minimum prédéterminé Cmin, l'ensemble de captage 2 reste dans sa position angulaire prédéterminée 16 où l'angle d'orientation θ de l'axe de captage d'énergie privilégié 3 par rapport à la position angulaire prédéterminée 16 est de θ=0°.

Lorsque le couple C exercé entre le support 5 et l'ensemble de captage 2 autour de l'axe de support 7 devient supérieur en valeur absolue à la valeur absolue du couple minimum prédéterminé Cmin, l'ensemble de captage 2 commence alors à pivoter autour de l'axe de support 7 et s'éloigne de sa position de référence 16.

Dès que la valeur absolue du couple C devient supérieure à la valeur absolue due couple minimum prédéterminé Cmin, l'angle d'orientation θ varie alors de manière linéaire en fonction du couple C. On constate que cette variation linéaire du couple en fonction de l'angle θ est symétrique de part et d'autre de la position de référence 16.

Le coefficient de variation linéaire du couple C en fonction de l'angle θ est, dans un premier sens de rotation 14 de l'ensemble, fonction d'une raideur propre à un premier ressort 8a appartenant aux moyens élastiques 8.

De même, le coefficient de variation linéaire du couple C en fonction de l'angle θ est, dans un second sens de rotation 15 de l'ensemble 2, fonction d'une raideur propre à un second ressort 8b appartenant aux moyens élastiques 8.

Comme on le voit sur la figure 1, l'ensemble de captage d'énergie 2 comprend une membrane 9 agencée pour onduler lorsqu'elle est plongée dans l'écoulement de fluide. Cette ondulation se fait selon une direction de déplacement d'une onde de membrane correspondant à l'axe de captage d'énergie privilégié 3. Une telle membrane est connue en elle-même par exemple dans le document brevet WO2010012888. Comme on le voit sur la figure 1, la membrane peut porter au moins un aileron d'attaque 21 relié au niveau d'un côté amont 11 de la membrane destiné à former son bord d'attaque pour forcer le pivotement de ce côté amont 11 autour d'un axe de pivotement 23 perpendiculaire à ce côté amont 11. Cet aileron d'attaque 21 permet de favoriser l'amorce d'un mouvement d'ondulation de la membrane 9 dans l'écoulement. De même, la membrane peut porter un aileron de fuite 22 relié à un côté amont de la membrane agencé pour forcer la membrane au niveau de son bord de fuite à pivoter selon un autre axe passant par ce bord de fuite et parallèle à l'axe 23. L'aileron de fuite 22 favorise une extension de la membrane dans le sens d'écoulement 4 du courant. Ces ailerons d'attaque 21 et de fuite 22 permettent de limiter un mouvement de départ en vrille de la membrane autour de l'axe de captage d'énergie privilégié 3.

L'ensemble de captage 2 comprend une pièce d'attache 10 de la membrane sur laquelle est attaché, via des liens souples, un côté amont 11 de la membrane 9.

La membrane 9 peut ainsi pivoter à l'endroit de cette liaison avec la pièce 10, selon un axe de pivotement 23 sensiblement perpendiculaire à l'axe de support 7. Sous l'effet de ce pivotement selon l'axe 23, la membrane se courbe selon des axes de courbures rectilignes parallèles à l'axe de pivotement 23. On constate alors que la membrane 9 ondule dans l'écoulement en formant à chaque instant une forme sensiblement sinusoïdale. Comme on le voit sur la figure 1, l'ensemble de captage peut comporter des moyens de limitation 50a, 50b de l'écartement du bord amont de la membrane vis-à-vis de son bord aval. Ces moyens de limitation 50a, 50b sont agencés pour que la membrane ne puisse pas se tendre selon un plan et maintiennent les bords amont et aval de la membrane à une distance maximale qui est inférieure à la longueur totale de la membrane. Ainsi la membrane présente forcément une courbure dans le sens d'écoulement du courant, ce qui favorise son ondulation dans le courant. Les moyens de limitation 50a et 50b sont des liens souples placés de part et d'autre de la membrane et s'étendant parallèlement aux bords latéraux de la membrane. Chacun de ces liens présente une extrémité fixée au niveau du bord amont et une extrémité fixée au niveau du bord aval de membrane.

L'ensemble 2 est couplé avec un convertisseur 12 adapté à convertir une partie au moins de l'énergie mécanique captée par l'ensemble de captage 2 en une énergie électrique. Ici, le convertisseur 12 est porté intégralement par la membrane 9 de manière à générer de l'énergie électrique à partir d'un mouvement d'ondulation de la membrane selon la direction de déplacement d'onde. Typiquement, ce convertisseur 12 présente plusieurs aimants permanents et plusieurs bobines qui sont reliés à la membrane 9 de manière que lors de l'ondulation de la membrane, les aimants permanents soient déplacés par rapport aux bobines et y induisent des courants électriques.

Ces bobines sont reliées électriquement à des conducteurs pour que les courants induits dans les bobines soient collectés et distribués vers un réseau de distribution électrique.

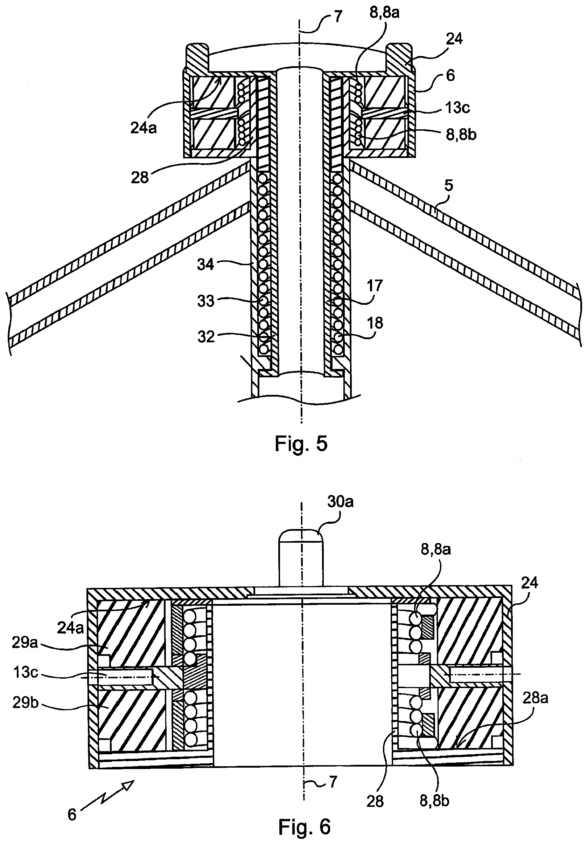

Comme indiqué précédemment, les moyens d'orientation décrits aux figures 5, 6, 7, 8 et 9 comportent des moyens élastiques de rappel 8 qui sont ici formés de premier et second ressorts de rappel 8a, 8b hélicoïdaux. Ces ressorts sont intégrés dans un boitier rotatif 24 des moyens d'orientation 6.

Chacun de ces ressorts 8a, 8b est agencé pour ramener ledit ensemble de captage 2 dans sa position angulaire de référence 16. Des moyens de couplage 13a, 13b de ces premier et second ressorts 8a, 8b avec l'ensemble de captage 2 sont formés de manière que, parmi les ressorts 8a, 8b,:
- c'est uniquement le premier ressort 8a qui tend à ramener l'ensemble de captage 2 vers sa position de référence 16 lorsqu'il est écarté de cette position de référence 16 par une rotation d'angle d'orientation θ, autour dudit axe du support 7, selon un premier sens de rotation 14 ; et
- c'est uniquement le second ressort 8b qui tend à ramener l'ensemble de captage 2 vers sa position de référence 16 lorsqu'il est écarté de cette position de référence 16 par une rotation autour dudit axe du support 7, selon un second sens de rotation 15 contraire audit premier sens de rotation 14.

Chacun des premier et second moyens de couplage 13a, 13b est en forme de bague annulaire dotée d'une butée angulaire 25a pour le premier moyen de couplage 13a et d'une butée angulaire 25b pour le second moyen de couplage 13b.

Les moyens d'orientation 6 présentent également :
- une troisième bague annulaire 13c assujettie à rotation avec l'ensemble de captage 2 ;
- des quatrième et cinquième bagues annulaires 26a, 26b assujetties à rotation avec le support 5.

La troisième bague annulaire 13c présente des butées angulaires 27a, 27b. La butée 27a de la troisième bague 13c est agencée pour buter contre la butée angulaire 25a de la bague 13a, nommée premier moyen de couplage 13a, lorsque l'ensemble de captage 2 est pivoté selon l'axe de support 7 dans un premier sens de rotation 14 par rapport au support 5.

La butée 27b de la troisième bague 13c est agencée pour buter contre la butée angulaire 25b de la bague 13b, nommée second moyen de couplage 13b, lorsque l'ensemble de captage 2 est pivoté selon l'axe de support 7 dans un second sens de rotation 15 par rapport au support 5, ce second sens de rotation 15 étant opposé au premier sens de rotation 14.

Comme le premier ressort de rappel 8a présente une extrémité 8a1 couplée à la bague 13a et une autre extrémité 8a2 couplée à la quatrième bague 26a, c'est ce premier ressort 8a qui lors de la rotation selon le premier sens de rotation 14 depuis la position angulaire de référence 16, s'oppose à l'éloignement de l'ensemble de captage vis-à-vis de sa position angulaire de référence 16. Dans ce mouvement de pivotement de l'ensemble 2 par rapport au support 5 depuis la position angulaire 16 et dans le premier sens de rotation 14, le second ressort 8b est découplé de la troisième bague 13c, car le second moyen 13b présente une seconde butée angulaire 25c en prise avec une butée angulaire 26b1 formée sur la cinquième bague 26b qui est fixe par rapport au support. Cette butée angulaire 26b1 est disposée pour s'opposer au pivotement du second moyen de couplage 13b au-delà de la position de référence 16 et selon le premier sens de rotation 14 vis-à-vis du support 5.

Comme le second ressort de rappel 8b présente une extrémité 8b1 couplée à la bague 13b et une autre extrémité 8b2 couplée à la cinquième bague 26b, c'est ce second ressort 8b qui lors de la rotation selon le second sens de rotation 15 depuis la position angulaire de référence 16, s'oppose à l'éloignement de l'ensemble de captage 2 vis-à-vis de sa position angulaire de référence 16. Dans ce mouvement de pivotement de l'ensemble 2 par rapport au support 5 depuis la position angulaire 16 et dans le second sens de rotation 15, le premier ressort 8a est découplé de la troisième bague 13c, car le premier moyen 13b présente une seconde butée angulaire 25d en prise avec une butée angulaire 26a1 formée sur la quatrième bague 26a qui est également fixe par rapport au support. Cette butée angulaire 26a1 est disposée pour s'opposer au pivotement du premier moyen de couplage 13a, au-delà de la position de référence 16 et selon le second sens de rotation 15 vis-à-vis du support 5.

Chacune des bagues 13a, 13b, 13c, 26a, 26b et chacun des ressorts 8a, 8b est disposé autour d'un tube annulaire interne 28 des moyens d'orientation, ce tube 28 s'étendant autour de l'axe de support 7 et est assujetti fixement au support 5. Les quatrième et cinquième bagues 26a, 26b sont assujetties à ce tube 28 pour être fixe à rotation par rapport au support 5. Pour ce qui concerne la quatrième bague, son assujettissement au tube 28 est réalisé via une rondelle 40.

Le boitier rotatif 24 des moyens d'orientation 6 qui s'étend autour des bagues 13a, 13b, 13c, 26a, 26b et de chacun des ressorts 8a, 8b est assujetti d'une part à rotation avec la troisième bague 13c et d'autre part avec l'ensemble de captage 2 selon l'axe de rotation 7.

L'assujettissement de la troisième bague 13c avec le boitier 24 se fait via des vis périphériques passant dans des évidements 41 du boitier et pénétrant à la périphérie de la troisième bague 13c.

Le boitier rotatif 24 et le tube 28 forment un habillage externe des moyens d'orientation 6 permettant de protéger les ressorts 8a, 8b contre des agressions provenant de l'extérieur des moyens d'orientation 6.

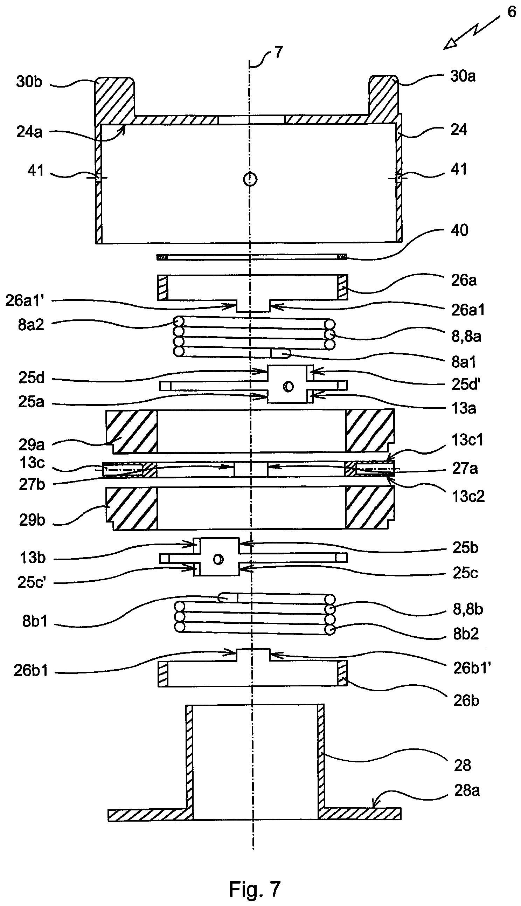

Enfin, comme on le voit sur la figure 7, les moyens d'orientation présentent des sixième et septième bagues de friction 29a, 29b respectivement disposées autour de l'axe de support et par conséquent autour du tube 8.

La sixième bague de friction 29a est axialement disposée entre une face interne 24a du boitier rotatif 24 et une première face 13c1 de la troisième bague 13c de manière à limiter la friction axiale (c'est-à-dire selon l'axe 7) entre cette bague 13c et le boitier 24 lors du pivotement de l'ensemble de captage 2 par rapport au support 5.

La septième bague de friction 29b est axialement disposée entre une face axiale interne 28a du tube 28 et une seconde face 13c2 de la troisième bague 13c de manière à limiter la friction axiale entre cette bague 13c et le tube 28 lors du pivotement de l'ensemble de captage 2 par rapport au support 5.

Pour assujettir à rotation le boitier 24 avec l'ensemble de captage 2, on utilise des ergots 30a, 30b formés à l'extérieur du boitier 24, ces ergots 30a, 30b sont respectivement agencés pour venir dans des évidements complémentaires 31a, 31b formés sur une face rigide de l'ensemble de captage 2. Des vis de serrage sont prévues pour plaquer la face rigide de l'ensemble de captage 2 contre le boitier 24. Ainsi l'assemblage des moyens d'orientation 6 avec l'ensemble de captage se fait simplement en introduisant les ergots 30a, 30b dans les évidements complémentaires 31a, 31b puis en serrant cet ensemble de captage 2 contre le boitier 24 à l'aide des vis. Les ergots peuvent être positionnés pour servir de détrompeur et autoriser une seule position d'assemblage possible entre les moyens d'orientation 6 et l'ensemble de captage 2. On évite ainsi une erreur d'orientation de l'axe de captage privilégié dans l'environnement marin où est fixé et orienté le support 5. Ceci facilite grandement la maintenance de l'hydrolienne, lorsque par exemple on démonte l'ensemble de captage 2 pour le maintenir.

Idéalement, les moyens d'orientation 6 sont agencés pour limiter la rotation de l'ensemble de captage 2 par rapport au support à au plus 180° de part et d'autre de la position angulaire de référence 16. Pour cela, la bague 13a présente une troisième butée 25d' agencée pour buter contre une seconde butée 26a1' lorsque l'ensemble à pivoté d'environ 170° à 180° depuis sa position angulaire de référence et selon ledit premier sens de rotation 14. De même, la bague 13b présente une troisième butée 25c' agencée pour buter contre une seconde butée 26b1' lorsque l'ensemble à pivoté d'environ 170 à 180° depuis sa position angulaire de référence 16 et selon ledit second sens de rotation 15.

Par ce mode de réalisation les moyens d'orientation peuvent réaliser une orientation équivalente dans les deux sens d'orientation 14 et 15 tout en limitant la torsion des ressorts 8a, 8b et leur détérioration.

Comme illustré sur la figure 5, l'hydrolienne peut présenter des moyens de guidage en translation 32, qui ont ici la forme d'un tube assemblé fixement au boitier 24 et qui s'étende depuis la face interne 24a du boitier 24, selon l'axe de support 7, en direction du support 5. Ce tube 32 assujetti au boitier 24 passe à l'intérieur du tube 28 qui est assujetti au support 5.

Ces moyens de guidage en translation 32 comportent des moyens de suspension élastique 33 de l'ensemble de captage 2 par rapport au support 5. Ici les moyens de suspension élastique 33 comportent un ressort de compression s'étendant à l'extérieur du tube 32 et à l'intérieur d'un tube 34 appartenant au support 5 et s'étendant selon l'axe 7. Ce ressort de compression tend à écarter le boitier 24 du tube 28 pour ainsi limiter les efforts axiaux de part et d'autre de la troisième bague 13c et ainsi limiter les frictions pouvant s'opposer à la rotation de l'ensemble de captage 2 par rapport au support 5.

Comme on le voit en particulier sur la figure 1, l'hydrolienne comporte en outre des moyens d'ancrage 35 du support 5 agencés pour permettre un ancrage du support 5 sur un sol 36 d'un fond marin et interdire la rotation de ce support 5 par rapport au sol 36 sur lequel il est ancré.

Ces moyens d'ancrage 35 peuvent comporter uniquement des moyens rigides plantés dans le sol 36 somme sur la figure 1.

Alternativement, dans un mode de réalisation non représenté, si le support est un support doté de flotteurs, ces moyens d'ancrage 35 peuvent comporter des filins souples reliés d'une part fixement au sol 36 et d'autre part au support flottant pour éviter qu'il ne puisse se pivoter par rapport au sol. Dans tous les cas les moyens d'ancrage sont agencés pour éviter que le support ne puisse pivoter par rapport au sol 36 selon un axe vertical s'étendant depuis ce sol. On permet ainsi une orientation fixe de la position de référence 16 par rapport au sol 36.

## Revendications

1. Hydrolienne (1) comprenant un ensemble de captage d'énergie (2) adapté à capter de l'énergie mécanique dans un écoulement de fluide (4), l'ensemble de captage (2) comportant un axe de captage d'énergie privilégié (3) tel que le rendement de captage d'énergie mécanique par l'ensemble de captage (2) est maximum lorsque cet axe de captage d'énergie privilégié (3) est placé parallèlement à un sens d'écoulement de fluide (4) dans lequel est plongé l'ensemble de captage (2), l'hydrolienne comportant en outre un support (5) pour porter l'ensemble de captage (2), **caractérisée en ce que** l'hydrolienne (1) comporte des moyens d'orientation (6) de l'ensemble de captage par rapport au support (5), ces moyens d'orientation (6) étant agencés pour orienter l'ensemble de captage (2) par pivotement de cet ensemble de captage (2) selon au moins un axe du support (7), ces moyens d'orientation (6) comportant en outre des moyens élastiques de rappel (8) de l'ensemble de captage vers une position angulaire de référence (16) de l'ensemble de captage (2) par rapport au support (5), et ces moyens d'orientation (6) étant adaptés :
- pour orienter l'ensemble de captage par rapport au support (5) lorsque cet ensemble de captage (2) est plongé dans un écoulement de fluide présentant un sens d'écoulement (4) et une vitesse d'écoulement supérieure ou égale à une vitesse minimale d'écoulement donnée, lors de cette orientation, l'axe de captage d'énergie privilégié (3) étant sensiblement orienté parallèlement au sens d'écoulement (4) ; et
- pour maintenir l'ensemble de captage dans sa position angulaire de référence (16) par rapport au support (5) lorsque la vitesse de l'écoulement est en dessous de la vitesse d'écoulement donnée.

2. Hydrolienne (1) selon la revendication 1, dans laquelle les moyens d'orientation (6) sont agencés pour réaliser cette orientation dès que la vitesse minimale d'écoulement donnée dépasse 0.4 mètres par seconde.

3. Hydrolienne selon l'une quelconque des revendications 1 ou 2, dans laquelle l'ensemble de captage d'énergie (2) comprend :
- une membrane (9) agencée pour que lorsqu'elle est plongée dans un écoulement de fluide (4), elle ondule selon une direction de déplacement d'une onde de membrane correspondant à l'axe de captage d'énergie privilégié (3) ;
- une pièce d'attache (10) de la membrane sur laquelle est attaché au moins un côté amont (11) de la membrane (9).

4. Hydrolienne selon l'une quelconque des revendications précédentes dans laquelle, l'ensemble de captage d'énergie mécanique (2) est couplé avec un convertisseur (12) adapté à convertir une partie au moins de l'énergie mécanique captée par l'ensemble de captage (2) en une énergie électrique.

5. Hydrolienne selon les revendications 3 et 4, dans laquelle ledit convertisseur (12) est porté intégralement par la membrane (9) de manière à générer de l'énergie électrique à partir d'un mouvement d'ondulation de la membrane (9) selon la direction de déplacement d'onde le long de la membrane (9).

6. Hydrolienne selon l'une quelconque des revendications précédentes, dans laquelle les moyens élastiques de rappel (8) comportent des premier et second ressorts de rappel (8a, 8b) chacun agencé pour ramener ledit ensemble de captage (2) dans sa position angulaire de référence (16), l'hydrolienne (1) comporte en outre des moyens de couplage (13a, 13b, 13c) de ces premier et second ressorts (8a, 8b) avec l'ensemble de captage (2), ces moyens de couplage étant tels que :
- c'est le premier ressort (8a) qui tend à ramener l'ensemble de captage (2) vers sa position de référence (16) lorsqu'il est écarté de cette position de référence (16) par une rotation, autour dudit axe du support (7), selon un premier sens de rotation (14) ; et
- c'est le second ressort (8b) qui tend à ramener l'ensemble de captage (2) vers sa position de référence (16) lorsqu'il est écarté de cette position de référence (16) par une rotation autour dudit axe du support (7), selon un second sens de rotation (15) contraire audit premier sens de rotation (14).

7. Hydrolienne selon la revendication 6, dans laquelle les moyens de couplages (13a, 13b, 13c) sont agencés pour :
- découpler le second ressort (8b) vis-à-vis de l'ensemble de captage (2) lorsque le premier ressort (8a) tend à ramener l'ensemble de captage (2) vers sa position de référence (16) ; et pour
- découpler le premier ressort (8a) vis-à-vis de l'ensemble de captage (2) lorsque le second ressort (8b) tend à ramener l'ensemble de captage (2) vers sa position de référence (16).

8. Hydrolienne selon l'une quelconque des revendications précédentes, comportant en outre un moyen de guidage en translation (32), de l'ensemble de captage (2) par rapport au support (5), ce guidage en translation (32) s'effectuant selon ledit axe du support (5), ces moyens de guidage en translation (32) comportant des moyens de suspension élastique (33) de l'ensemble de captage (2) par rapport au support (5).

9. Procédé d'utilisation d'une hydrolienne (1) selon l'une quelconque des revendications précédentes, ladite hydrolienne comportant en outre des moyens d'ancrage (35) du support (5) agencés pour permettre un ancrage du support (5) sur un sol (36) d'un fond marin et interdire la rotation de ce support par rapport au sol (36) sur lequel il est ancré, le procédé comprenant une étape d'ancrage du support de l'hydrolienne sur le sol de manière que lorsque l'ensemble de captage est en position angulaire de référence (16) par rapport au support (5), l'axe de captage d'énergie privilégié (3) se trouve alors sensiblement parallèle à une direction d'écoulement de fluide (4') correspondant à une direction d'écoulement principale du courant marin lors d'une marée montante et/ou d'une marée descendante.

## Patentansprüche

1. Meeresströmungskraftwerk (1), umfassend eine Energiegewinnungseinheit (2), die dazu geeignet ist, mechanische Energie aus einer Fluidströmung (4) zu gewinnen, wobei die Gewinnungseinheit (2) eine bevorzugte Energiegewinnungsachse (3) umfasst, so dass die Ausbeute der mechanischen Energiegewinnung durch die Gewinnungseinheit (2) maximal ist, wenn diese bevorzugte Energiegewinnungsachse (3) parallel zu einer Richtung der Fluidströmung (4) angeordnet ist, in die die Gewinnungseinheit (2) eingetaucht ist, wobei das Meeresströmungskraftwerk ferner einen Träger (5) zum Tragen der Gewinnungseinheit (2) umfasst, **dadurch gekennzeichnet, dass** das Meeresströmungskraftwerk (1) Ausrichtungsmittel (6) zum Ausrichten der Gewinnungseinheit in Bezug auf den Träger (5) umfasst, wobei diese Ausrichtungsmittel (6) so ausgebildet sind, dass sie die Gewinnungseinheit (2) durch Drehen dieser Gewinnungseinheit (2) um mindestens eine Trägerachse (7) ausrichten, wobei diese Ausrichtungsmittel (6) ferner elastische Rückstellmittel (8) zum Rückstellen der Gewinnungseinheit in eine Referenzwinkelposition (16) der Gewinnungseinheit (2) in Bezug auf den Träger (5) umfassen, und wobei diese Ausrichtungsmittel (6) dazu geeignet sind:
- die Gewinnungseinheit in Bezug auf den Träger (5) auszurichten, wenn diese Gewinnungseinheit (2) in eine Fluidströmung eingetaucht ist, die eine Strömungsrichtung (4) und eine Strömungsgeschwindigkeit aufweist, die höher oder gleich einer gegebenen minimalen Strömungsgeschwindigkeit ist, während dieser Ausrichtung, wobei die bevorzugte Energiegewinnungsachse (3) im Wesentlichen parallel zur Strömungsrichtung (4) ausgerichtet ist; und
- die Gewinnungseinheit in ihrer Referenzwinkelposition (16) in Bezug auf den Träger (5) zu halten, wenn die Geschwindigkeit der Strömung unter der gegebenen Strömungsgeschwindigkeit ist.

2. Meeresströmungskraftwerk (1) nach Anspruch 1, bei dem die Ausrichtungsmittel (6) so ausgebildet sind, dass sie diese Ausrichtung durchführen, sobald die gegebene minimale Strömungsgeschwindigkeit 0,4 Meter pro Sekunde überschreitet.

3. Meeresströmungskraftwerk (1) nach einem der Ansprüche 1 oder 2, bei dem die Energiegewinnungseinheit (2) umfasst:
- eine Membran (9), die so ausgebildet ist, dass sie sich, wenn sie in eine Fluidströmung (4) eingetaucht ist, in einer Bewegungsrichtung einer Membranwelle wellt, die der bevorzugten Energiegewinnungsachse (3) entspricht;
- ein Befestigungsteil (10) zur Befestigung der Membran, an dem mindestens eine stromaufwärtige Seite (11) der Membran (9) befestigt ist.

4. Meeresströmungskraftwerk nach einem der vorhergehenden Ansprüche, bei dem die mechanische Energiegewinnungseinheit (2) mit einem Wandler (12) gekoppelt ist, der dazu geeignet ist, zumindest einen Teil der von der Gewinnungseinheit gewonnenen mechanischen Energie in elektrische Energie umzuwandeln.

5. Meeresströmungskraftwerk nach den Ansprüchen 3 und 4, bei dem der genannte Wandler (12) ganz von der Membran (9) getragen wird, derart, dass elektrische Energie aus einer Wellenbewegung der Membran (9) in der Wellenbewegungsrichtung entlang der Membran (9) erzeugt wird.

6. Meeresströmungskraftwerk nach einem der vorhergehenden Ansprüche, bei dem die elastischen Rückstellmittel (8) erste und zweite Rückstellfedern (8a, 8b) umfassen, die jeweils so ausgebildet sind, dass sie die Gewinnungseinheit (2) in ihre Referenzwinkelposition (16) zurückbringen, wobei das Meeresströmungskraftwerk (1) ferner Kopplungsmittel (13a, 13b, 13c) zum Koppeln dieser ersten und zweiten Federn (8a, 8b) mit der Gewinnungseinheit (2) umfasst, wobei diese Kopplungsmittel derart sind, dass:
- es die erste Feder (8a) ist, die darauf abzielt, die Gewinnungseinheit (2) in ihre Referenzposition (16) zurückzubringen, wenn sie von dieser Referenzposition (16) durch eine Drehung um die genannte Achse des Trägers (7) in eine erste Drehrichtung (14) entfernt ist; und
- es die zweite Feder (8b) ist, die darauf abzielt, die Gewinnungseinheit (2) in ihre Referenzposition (16) zurückzubringen, wenn sie von dieser Referenzposition (16) durch eine Drehung um die genannte Achse des Trägers (7) in eine zweite Drehrichtung (15), die zur ersten Drehrichtung (14) entgegengesetzt ist, entfernt ist.

7. Meeresströmungskraftwerk nach Anspruch 6, bei dem die Kopplungsmittel (13a, 13b, 13c) so ausgebildet sind, dass sie
- die zweite Feder (8b) gegenüber der Gewinnungseinheit entkoppeln, wenn die erste Feder (8a) darauf abzielt, die Gewinnungseinheit (2) in ihre Referenzposition (16) zurückzubringen; und
- die erste Feder (8a) gegenüber der Gewinnungseinheit (2) entkoppeln, wenn die zweite Feder (8b) darauf abzielt, die Gewinnungseinheit (2) in ihre Referenzposition (16) zurückzubringen.

8. Meeresströmungskraftwerk nach einem der vorhergehenden Ansprüche, ferner umfassend ein Translationsführungsmittel (32) zur Translationsführung der Gewinnungseinheit (2) in Bezug auf den Träger (5), wobei diese Translationsführung (32) entlang der Trägerachse (5) erfolgt, wobei diese Translationsführungsmittel (32) federnde Aufhängungsmittel (33) zur federnden Aufhängung der Gewinnungseinheit (2) in Bezug auf den Träger (5) umfassen.

9. Verfahren zur Nutzung eines Meeresströmungskraftwerks (1) nach einem der vorhergehenden Ansprüche, wobei das genannte Meeresströmungskraftwerk ferner Verankerungsmittel (35) zur Verankerung des Trägers (5) umfasst, die so ausgebildet sind, dass sie eine Verankerung des Trägers (5) auf einem Boden (36) eines Meeresuntergrundes ermöglichen und die Drehung dieses Trägers in Bezug auf den Boden (36), auf dem er verankert ist, verhindern, wobei das Verfahren einen Verankerungsschritt zum Verankern des Trägers des Meeresströmungskraftwerks auf dem Boden umfasst, derart, dass, wenn die Gewinnungseinheit in der Referenzwinkelposition (16) in Bezug auf den Träger (5) ist, die bevorzugte Energiegewinnungsachse (3) dann im Wesentlichen parallel zu einer Fluidströmungsrichtung (4') ist, die einer Hauptströmungsrichtung der Meeresströmung während einer Flut und/oder einer Ebbe entspricht.

## Claims

1. A water current power generator (1) comprising an energy capture assembly (2) adapted to capture mechanical energy from a fluid flow (4), the capture assembly (2) having a preferred energy capture axis (3) such that the efficiency of mechanical energy capture by the capture assembly (2) is at a maximum when the preferred energy capture axis (3) extends parallel to a flow direction (4) of fluid in which the capture assembly (2) is immersed, the generator also having a support (5) for carrying the capture assembly (2), the generator (1) being **characterized in that** it includes steering means (6) for steering the capture assembly relative to the support (5), the steering means (6) being arranged to steer the capture assembly (2) by pivoting the capture assembly (2) about at least one axis of the support (7), these steering means (6) also including resilient return means (8) for returning the capture assembly towards a reference angular position (16) of the capture assembly (2) relative to the support (5), and these steering means (6) being adapted :
- to steer the capture assembly (2) relative to the support (5) when this capture assembly (2) is immersed in a fluid flow presenting a flow direction (4) and a flow speed superior or equal to a given minimum flow speed, during this orientation, the preferred energy capture axis (3) being substantially oriented parallel to the flow direction (4); and
- to keep the capture assembly in its angular reference position (16) relative to the support (5) while the flow speed is below the given flow speed.

2. A generator (1) according to claim 1, wherein the steering means (6) are arranged to perform said steering as soon as the given minimum flow speed exceeds 0.4 m/s.

3. A generator according to claim 1 or claim 2, wherein the energy capture assembly (2) comprises:
• a diaphragm (9) arranged so that when it is immersed in a fluid flow (4), it undulates in a travel direction of a diaphragm wave that corresponds to the preferred energy capture axis (3); and
• an attachment part (10) of the diaphragm having at least an upstream end (11) of the diaphragm (9) attached thereto.

4. A generator according to any preceding claim, wherein the mechanical energy capture assembly (2) is coupled to a converter (12) suitable for converting at least a fraction of the mechanical energy captured by the capture assembly (2) into electrical energy.

5. A generator according to claim 3 or claim 4, wherein said converter (12) is carried in full by the diaphragm (9) so as to generate electrical energy from an undulating motion of the diaphragm (9) in the wave travel direction along the diaphragm (9).

6. A generator according to any preceding claim, wherein the resilient return means (8) comprise first and second return springs (8a, 8b), each arranged to return said capture assembly (2) into its reference angular position (16), the generator (1) further including coupling means (13a, 13b, 13c) for coupling these first and second springs (8a, 8b) with the capture assembly (2), the coupling means being such that:
• it is the first spring (8a) that tends to return the capture assembly (2) towards its reference position (16) when it has departed from the reference position (16) by turning about said support axis (7) in a first turning direction (14); and
• it is the second spring (8b) that tends to return the capture assembly (2) towards its reference position (16) when it has departed from the reference position (16) by turning about said support axis (7) in a second turning direction (15) contrary to said first turning direction (14).

7. A generator according to claim 6, wherein the coupling means (13a, 13b, 13c) are arranged to:
• decouple the second spring (8b) from the capture assembly (2) when the first spring (8a) is tending to return the capture assembly (2) towards its reference position (16); and
• decouple the first spring (8a) from the capture assembly (2) when the second spring (8b) is tending to return the capture assembly (2) towards its reference position (16).

8. A generator according to any preceding claim, further including means (32) for providing the capture assembly (2) with guidance for movement in translation relative to the support (5), this guidance (32) for movement in translation taking place along said axis of the support (5), these means (32) for providing guidance in translation including resilient suspension means (33) for suspending the capture assembly (2) relative to the support (5).

9. A method of using a generator (1) according to any preceding claim, said generator further including anchor means (35) for anchoring the support (5) and arranged to enable the support (5) to be anchored to a bed (36) of a sea bottom and to prevent the support from turning relative to the sea bed (36) on which it is anchored, the method including a step of anchoring the support of the generator on the sea bed in such a manner that when the capture assembly is in the reference angular position (16) relative to the support (5), the preferred energy capture axis (3) is then substantially parallel to a fluid flow direction (4') corresponding to a main flow direction of the sea current during a rising tide and/or during a falling tide.
